Europäisches Patentamt

European Patent Office

Office européen des brevets

(11) Numéro de publication: **0 185 592**
**A1**

## (12) DEMANDE DE BREVET EUROPEEN

(21) Numéro de dépôt: **85402494.0**

(22) Date de dépôt: **16.12.85**

(51) Int. Cl.⁴: **H 04 N 3/09**

(30) Priorité: **17.12.84 FR 8419400**

(43) Date de publication de la demande:
**25.06.86 Bulletin 86/26**

(84) Etats contractants désignés:
**AT BE CH DE FR GB IT LI LU NL SE**

(71) Demandeur: **HGH INGENIERIE SYSTEMES INFRAROUGES SA**
**31, avenue du Général Leclerc**
**F-92340 Bourg la Reine(FR)**

(72) Inventeur: **Gaussorgues, Gilbert**
**3, rue Gazan**
**F-75014 Paris(FR)**

(74) Mandataire: **Joly, Jean-Jacques et al,**
**CABINET BEAU DE LOMENIE 55, rue d'Amsterdam**
**F-75008 Paris(FR)**

(54) **Appareil de détection pour la mesure de température sans contact.**

(57) L'appareil comporte un dispositif de balayage ligne constitué par deux lames prismatiques (12, 14) entraînées en rotation en formant un disasporamètre, un dispositif de focalisation formé par des miroirs (16a, 16b) et un détecteur de rayonnement (18) qui forment un signal représentatif de l'énergie de rayonnement reçu. Les lames prismatiques (12, 14) sont entraînées en rotation de façon continue avec des vitesses égales et opposées et sont réalisées en silicium, l'appareil étant plus particulièrement destiné aux applications industrielles demandant un balayage à fréquence élevée sur un champ limité.

Fig.3

EP 0 185 592 A1

**Appareil de détection pour la mesure de température sans contact**

La présente invention concerne un appareil de détection pour la mesure de température sans contact.

Dans de nombreuses applications industrielles, il est utile de pouvoir effectuer une surveillance de phénomènes thermiques sans contact avec la source de rayonnement.

Les dispositifs de mesure de température sans contact comprennent généralement un appareil de détection qui fournit un signal électrique représentant la température d'une source surveillée, et une unité de traitement recevant ce signal pour le traiter.

L'appareil de détection se compose généralement d'un dispositif de balayage, d'une optique de focalisation et d'un détecteur de rayonnement qui fournit un signal fonction de l'énergie de rayonnement reçue.

Lorsque l'appareil de détection est en mouvement relatif par rapport à une source de rayonnement surveillée, il est généralement utilisé un dispositif opto-mécanique de balayage ligne qui effectue une analyse ligne par ligne transversalement par rapport à la direction du mouvement relatif.

Il s'avère que les dispositifs de balayage ligne connus ne satisfont pas aux exigences requises pour certaines applications, notamment pour la surveillance de phénomènes thermiques qui exigent une fréquence de balayage élevée comme, par exemple, le contrôle de soudure en continu.

Aussi, la présente invention a pour objet de fournir un appareil de détection capable d'atteindre de tels objectifs, c'est-à-dire en particulier un appareil de détection avec un dispositif de balayage opto-mécanique capable de travailler à fréquence élevée tout en conservant une fiabilité et un coût compatibles avec une utilisation industrielle.

Ce but est atteint du fait que, conformément à l'invention, le dispositif de balayage ligne comporte deux lames prismatiques montées en diasporamètre et réalisées en silicium.

Comme connu en soi, les diasporamètres sont constitués

**0185592**

par deux prismes traversés successivement par le rayonnement et animés d'un mouvement de rotation continue l'un par rapport à l'autre autour de l'axe optique du faisceau incident. La figure de balayage voulue (ligne) est déterminée par les paramètres géométriques et cinétiques (angles au sommet des prismes, indices de réfraction, vitesses de rotation). Grâce à un tel montage, un balayage à fréquence élevée sur un champ restreint est possible avec un entraînement en continu du dispositif de balayage électro-optique. De plus, l'utilisation de lames prismatiques en silicium est particulièrement favorable ; d'une part, le silicium disperse peu le faisceau incident (moindre étalement de la tache image) ; d'autre part, le silicium présente un bon coefficient de transmission dans la bande de longueur d'onde comprise entre 3 et 5 microns, bande dans laquelle le rayonnement est maximum pour des objets à des températures d'environ 300 degrés Centigrades, ce qui correspond à un assez grand nombre d'applications industrielles.

D'autres particularités et avantages de l'appareil de détection conforme à l'invention ressortiront à la lecture de la description faite ci-après à titre indicatif mais non limitatif en référence aux dessins annexés sur lesquels :

- les figures 1 et 2 sont deux vues schématiques montrant des dispositifs de détection de l'art antérieur,

- la figure 3 est un schéma très général d'un appareil de détection selon l'invention,

- la figure 4 est une vue schématique en perspective montrant un mode de réalisation d'un appareil de détection selon l'invention,

- la figure 5 est une vue détaillée en coupe axiale de l'appareil de la figure 4, et

- les figures 6, 7, 8 et 9 illustrent une application industrielle de l'appareil conforme à l'invention.

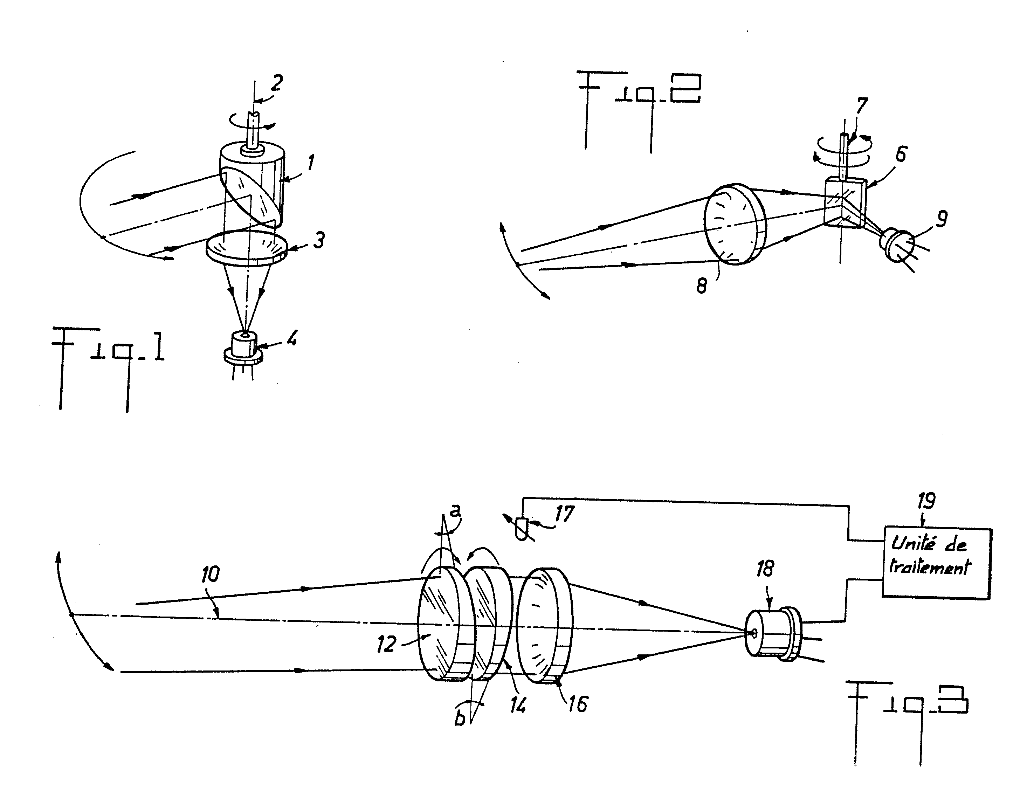

La figure 1 est un schéma d'un analyseur ligne connu utilisant un miroir 1 qui tourne de façon continue autour d'un axe 2 et qui réfléchit le rayonnement reçu sur une optique 3. Un détecteur 4 reçoit le faisceau focalisé par l'optique 3. Le champ balayé est de 360 degrés mais, généralement, une partie seulement du champ est traitée, par exemple 80 degrés. Ce dispositif opto-mécanique présente l'avantage de la rotation continue, c'est-à-dire fiabilité et stabilité. Toutefois, la fréquence de balayage, qui dépend de la vitesse de rotation, ne peut pas être élevée car elle conduirait, même en ne traitant qu'une faible partie de la rotation complète, à une vitesse d'échantillonnage du signal incompatible avec les moyens de traitement du signal disponibles. A titre indicatif, les fréquences de balayage possibles sont en pratique, de l'ordre de la dizaine de Hertz.

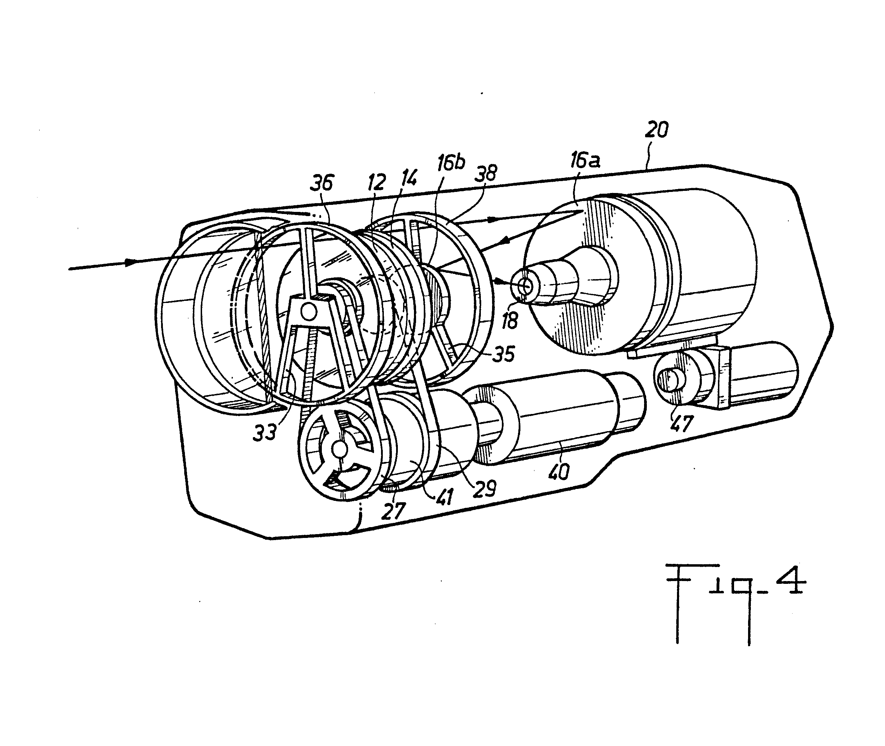

La figure 2 montre un dispositif connu qui pourrait théoriquement autoriser un balayage à fréquence élevée sur un petit champ. Ce dispositif comprend un miroir 6 qui oscille autour d'un axe 7 pour renvoyer sur un détecteur 9 le rayonnement reçu à travers une optique de focalisation 8. Bien qu'en principe une fréquence de balayage élevée soit possible, il n'en est pas de même en pratique car le mode de balayage choisi (oscillations) ne permet pas d'assurer la fiabilité et la stabilité compatibles avec un environnement industriel. On notera par ailleurs que la disposition du miroir en aval de l'optique de focalisation nécessite, pour cette dernière, une structure relativement importante et complexe. Un emplacement de l'optique de focalisation en aval du miroir pourrait être imaginée, mais conduirait à un miroir de plus grandes dimensions, donc à une plus grande inertie de l'équipage oscillant.

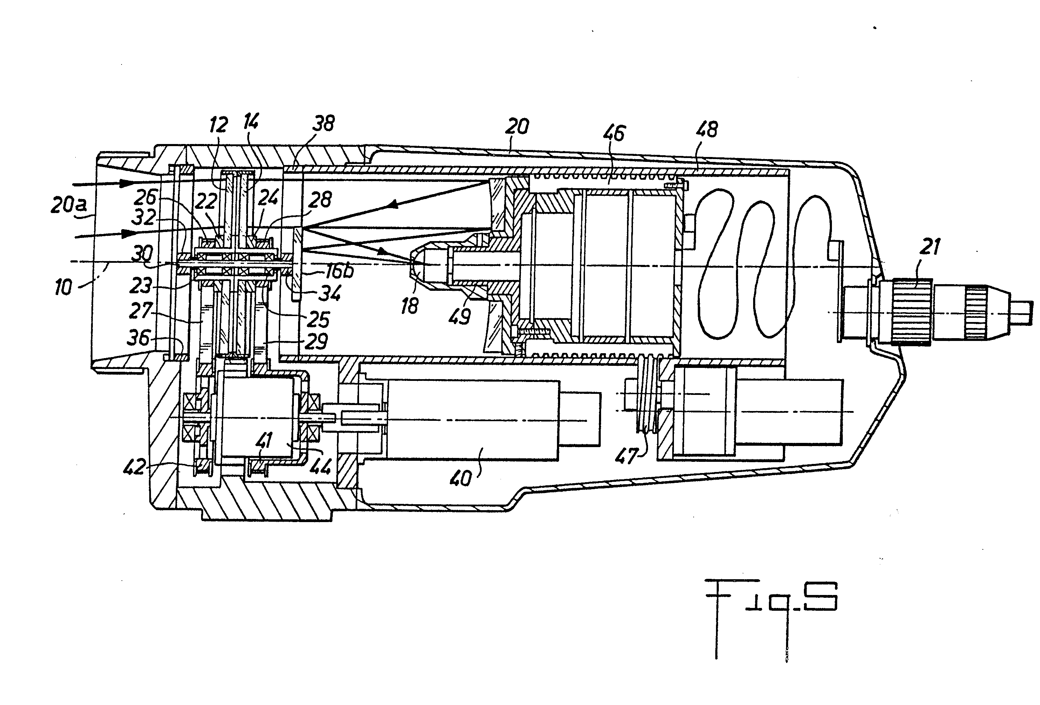

La figure 3 illustre le principe de réalisation de l'appareil conforme à l'invention permettant un balayage à fréquence élevée sur un champ limité.

Cet appareil comprend essentiellement, alignés sur un même axe optique 10, un dispositif de balayage optique formé par deux lames prismatiques 12, 14 montées en diasporamètre, une optique de focalisation 16 et un détecteur de rayonnement 18.

La lame prismatique 12 est formée par un tronçon de cylindre qui est centré sur l'axe 10 et dont les deux faces planes forment entre elles un angle a. La lame 12 est animée d'un mouvement continu de rotation autour de l'axe 10 et reçoit le rayonnement provenant d'une source à surveiller 11 pour diriger ce rayonnement sur la deuxième lame prismatique 14. Cette dernière est également formée par un tronçon de cylindre qui est centré sur l'axe 10 et dont les deux faces planes forment entre elles un angle b. La lame prismatique 14 est animée d'un mouvement continu de rotation autour de l'axe 10, les sens de rotation des lames 12 et 14 étant opposés l'un à l'autre.

La figure de balayage est déterminée par les paramètres géométriques des lames prismatiques et vitesses de rotation. Un balayage ligne (portion de droite) est obtenu en utilisant des prismes égaux (angles au sommet a et b égaux) animés de mouvements de rotation avec des vitesses angulaires identiques et opposées. Le champ balayé dépend de la valeur des angles au sommet et des indices de réfraction des prismes. On notera que la vitesse avec laquelle est parcourue chaque ligne n'est pas constante mais varie avec une allure sinusoïdale. Aussi, on ne retiendra de préférence qu'une partie du champ total balayé, cette partie étant choisie, d'une part, pour englober la zone utile à surveiller et, d'autre part, pour correspondre à une fraction située entre crêtes de la courbe sinusoïdale représentant la variation de vitesse de parcours de la ligne.

Selon une caractéristique de l'invention, les lames prismatiques 12 et 14 sont réalisées en silicium en raison des bonnes caractéristiques de transmission de ce matériau dans la gamme de longueur d'ondes (3 à 5 microns) qui correspond à un maximum de rayonnement pour des températures de produits surveillés dans un assez grand nombre d'applications industrielles.

L'optique de focalisation 18 pourra également être réalisée en silicium.

Quant au détecteur de rayonnement, il peut être constitué, comme connu en soi, par un élément en séléniure de plomb refroidi par effet thermoélectrique (effet Peltier). Bien entendu, d'autres détecteurs infrarouges peuvent aussi être utilisés.

On a également représenté sur la figure 3 un capteur thermosensible 17, formé par exemple par une ou plusieurs thermistances placées sur ou dans la tête de détection, et destiné à fournir un signal de référence de température afin d'assurer, au niveau de l'unité de traitement, une compensation automatique de dérive en température. L'unité de traitement 19 ne fait pas partie de l'invention. Elle reçoit le signal délivré par le détecteur 18 et représentant la température de la source surveillée, ainsi que le signal de référence fourni par le capteur 17, ce qui permet, entre deux balayages, de recaler le signal de mesure fourni par le détecteur 19.

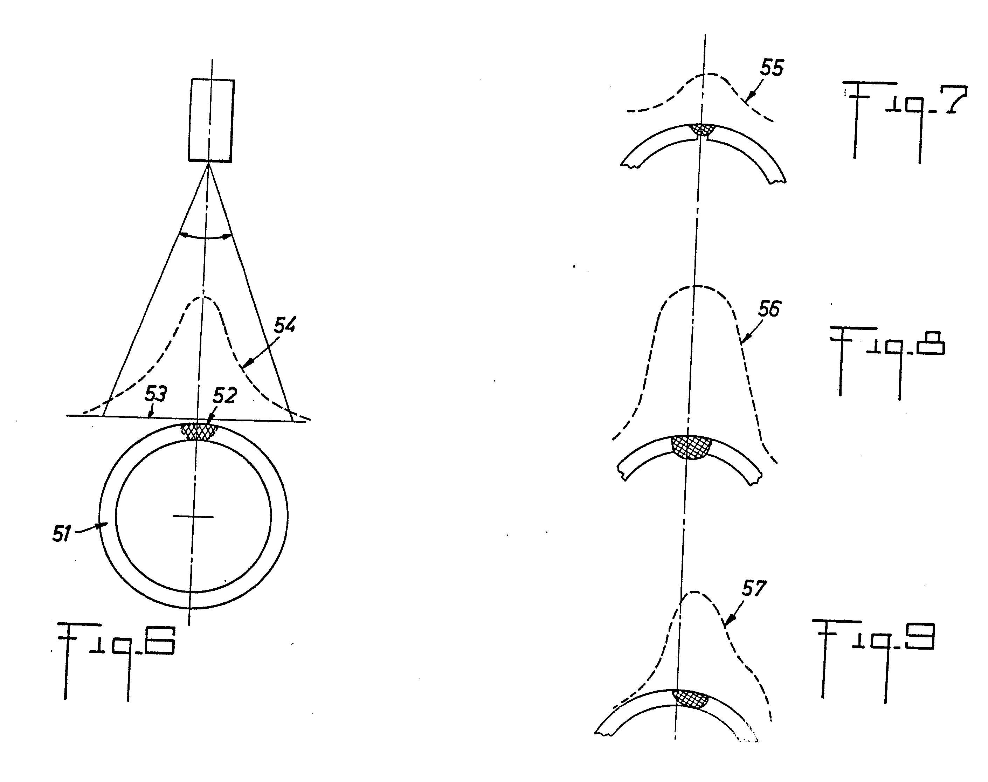

On se référera maintenant aux figures 4 et 5 qui illustrent de façon plus détaillée un mode de réalisation d'un appareil de détection selon l'invention.

Sur les figures 4 et 5, on retrouve, le long de l'axe optique 10, les deux lames prismatiques 12 et 14, le dispositif de focalisation formé par deux miroirs 16a, 16b et le détecteur de rayonnement 18.

Les lames 12, 14 sont solidaires de moyeux 22, 24 qui sont montés rotatifs sur un axe 30 au moyen de roulements à billes 23, 25. L'axe 30 est supporté par deux paliers 32, 34 eux-mêmes fixés au moyen de branches 33, 35 à des couronnes 36, 38 montées dans le boîtier 20 de l'appareil. Les couronnes 36, 38 ont un diamètre supérieur à celui des lames 12, 14 pour ne pas se trouver sur le trajet du faisceau reçu à travers l'ouverture frontale 20a du boîtier.

Les moyeux 22, 24 sont solidaires de pignons 26, 28 qui sont couplés à des roues dentées 42, 44 par l'intermédiaire de courroies crantées respectives 27, 29. Les roues 42, 44 sont couplées à l'arbre de sortie d'un moteur 40 respectivement par l'intermédiaire d'un dispositif de transmission 41 de rapport -1 et directement. De la sorte, les deux lames prismatiques sont entraînées en rotation avec des vitesses égales et opposées à partir d'un même moteur. La valeur absolue de la vitesse de rotation est constante et déterminée en fonction de la fréquence de balayage désirée. Avec le montage conforme à l'invention, celle-ci peut atteindre plusieurs centaines de Hertz.

En variante, les prismes 12 et 14 peuvent être entraînés en rotation au moyen de moteurs respectifs directement montés sur les axes des prismes et asservis électroniquement pour avoir des vitesses de même amplitude mais opposées l'une à l'autre.

On notera que les branches 33, 35 de support des moyeux présentent au rayonnement incident une surface aussi réduite que possible. Ainsi, chaque moyeu est dans l'exemple illustré supporté par seulement trois branches de faible section transversale ; de plus, deux des branches sont disposées de sorte que la partie du trajet des courroies d'entraînement 27, 29 qui est située dans le champ de l'appareil se trouve exactement dans l'"ombre" de ces deux branches (figure 4). De la sorte, les surfaces formant écran au rayonnement reçu sont réduites au minimum.

Le dispositif de focalisation comprend un premier miroir sphérique 16a qui reçoit le rayonnement ayant traversé le diasporamètre et le réfléchit sur un miroir-plan 16b d'où le rayonnement est renvoyé sur le détecteur 18. Le miroir-plan 16b est solidaire du palier 34 qui supporte l'axe 30 à l'extrémité de celui-ci située du côté aval du diasporamètre. On notera que les dimensions des moyeux 22, 24 sont choisies de sorte que leur diamètre extérieur n'excède pas celui du miroir 16b. Le miroir sphérique 16a est fixé à l'extrémité frontale d'une bague filetée 46 qui peut coulisser axialement à l'intérieur d'un guide tubulaire 48 monté dans le boîtier 20 à l'arrière de celui-ci. Le déplacement de la bague 46 est réalisé au moyen d'une vis 47 qui s'engage dans le filetage de la bague 46 à travers une ouverture formée dans le guide tubulaire 48. Le montage du miroir 16a forme avec le miroir 16b un dispositif de miroir télescopique qui permet très simplement un réglage de la focalisation du faisceau sur le détecteur de rayonnement.

Le détecteur de rayonnement 18 est monté sur un support 49 qui fait saillie à l'avant de la bague 46 à travers un passage axial formé dans le miroir sphérique 16a. Le signal produit par le détecteur 18 est transmis par une liaison souple à une prise 21 située à l'arrière du boîtier 20 pour le raccordement d'un câble de liaison avec une unité de traitement. De la même manière, le signal produit par un capteur de température tel qu'une thermistance éventuellement montée dans le boîtier 20 est acheminé à la prise 21 pour transmission à l'unité de traitement en vue de corriger le signal de mesure des dérives de température.

Le fonctionnement de l'appareil illustré par les figures 4 et 5 découle à l'évidence de ce qui précède et ne nécessite donc pas une description supplémentaire.

On se référera maintenant aux figures 6 à 9 qui illustrent un exemple d'application industrielle de l'appareil conforme à l'invention.

L'exemple envisagé est celui du contrôle de soudure en continu par détection du profil thermique du cordon de soudure réalisé.

On a schématisé sur la figure 6 la coupe d'un tube 51 présentant un cordon de soudure 52 à la sortie d'une machine de soudage en continu (non représentée). L'appareil de détection 50 conforme à l'invention balaie un champ restreint 53 qui s'étend de part et d'autre du cordon de soudure 54.

Au cours de chaque balayage d'une ligne, le signal fourni par l'appareil de détection (et éventuellement calibré pour compenser des dérives en températures) est échantillonné. Les amplitudes des échantillons successifs permettent d'obtenir le profil thermique 54 du cordon de soudure 52 dans le plan transversal contenant la ligne balayée. Ce profil présente normalement un maximum de température au droit du cordon de soudure, la température s'abaissant au fur et à mesure que l'on s'éloigne du cordon, et ce sensiblement symétriquement de chaque côté de celui-ci.

On a représenté sur les figures 7, 8 et 9 les profils thermiques obtenus respectivement dans le cas d'un cordon de soudure présentant un "manque de pénétration" (profil 55), un "excès de pénétration" (profil 56) et un "décentrage" de la soudure (profil 57).

Il apparaît clairement que, en comparant les profils 55,

**0185592**

56, 57 avec le profil 54, les défauts de soudure se traduisent respectivement par un abaissement, une élévation et un déplacement du maximum du profil.

L'unité de traitement associée à l'appareil de détection selon l'invention aura donc pour fonction de comparer le profil thermique de la soudure observée à un profil thermique de référence d'une soudure saine, ce profil de référence ayant été préalablement obtenu au moyen de l'appareil de détection et enregistré dans une mémoire de l'unité de traitement. En fonction des écarts entre profil observé et profil de référence, l'unité de traitement pourra alors délivrer des signaux de commande à la machine de soudage par exemple pour ajuster la vitesse de défilement du tube, la température de soudage, ou tout autre paramètre.

Bien entendu, l'application au contrôle de soudure effectuée en continu n'est donnée ici qu'à titre d'exemple, bien d'autres utilisations industrielles de l'appareil conforme à l'invention pouvant être envisagées.

REVENDICATIONS

1. Appareil de détection pour la mesure de température sans contact comprenant un dispositif de balayage ligne (12, 14), une optique de focalisation (16) et un détecteur de rayonnement (18) qui fournit un signal en fonction de l'énergie de rayonnement reçu, caractérisé en ce que le dispositif de balayage comporte deux lames prismatiques (12, 14) montées en diasporamètre et réalisées en silicium.

2. Appareil selon la revendication 1, caractérisé en ce que les lames prismatiques (12, 14) sont entraînées en rotation de façon continue et avec des vitesses égales et opposées.

3. Appareil selon la revendication 2, caractérisé en ce que les lames prismatiques sont entrâinés en rotation au moyen de moteurs respectifs directement montés sur leurs axes.

4. Appareil selon la revendication 2, caractérisé en ce que les lames prismatiques (12,14) sont entraînées en rotation par couplage mécanique à un même moteur d'entraînement (40).

5. Appareil selon la revendication 4, caractérisé en ce que les lames prismatiques sont montées en rotation autour d'un axe (30) qui passe dans des paliers (32, 34) supportés au moyen de pièces de liaison (33, 35) qui s'étendent au moins en partie dans le champ de l'appareil, et en ce que l'entraînement des lames prismatiques est réalisé par des moyens de transmission (27, 29) dont une partie de trajet est située dans le champ de l'appareil et se trouve dans l'ombre desdites pièces de liaison.

6. Appareil selon l'une quelconque des revendications 1 à 5, caractérisé en ce que le dispositif de focalisation est formé par un dispositif à miroir télescopique (16a, 16b).

7. Appareil selon la revendication 6, caractérisé en ce que le dispositif à miroir télescopique comprend : un premier miroir sphérique (16a) recevant le signal issu du diasporamètre, un deuxième miroir-plan (16b) recevant le signal réfléchi par le premier miroir pour le transmettre au détecteur de rayonnement, et des moyens de réglage des positions axiales relatives du premier et du deuxième miroirs.

8. Appareil selon l'une quelconque des revendications 1 à 7, caractérisé en ce que le dispositif de focalisation est réalisé en silicium.

9.      Appareil selon l'une quelconque des revendications 1 à 8, caractérisé en ce que le détecteur de rayonnement (18) comprend un élément en séléniure de plomb.

10.      Appareil selon l'une quelconque des revendications 1 à 9, caractérisé en ce que les deux lames prismatiques (12, 14), l'optique de focalisation (16) et le détecteur de rayonnement sont alignés sur un même axe optique (10).

Fig.1

Fig.2

Fig.3

Unité de traitement

1/4

0185592

Fig. 4

0185592

Fig.5

Fig. 7

Fig. 8

Fig. 6

Fig. 9

51

52

53

54

55

56

57

Office européen
des brevets

**RAPPORT DE RECHERCHE EUROPEENNE**

**0185592**

Numero de la demande

EP  85 40 2494

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | MEASUREMENT TECHNIQUES, vol. 23, no. 7, juillet 1980, pages 631-634, New York, US; V.V. ARISTOV et al.: "Scanning device for contactless measurement of temperature" <br> * Page 631, lignes 11-25, 33-38 * | 1 | H 04 N   3/09 |
| A | EP-A-0 071 531  (LINICK) <br><br> * Page 14, ligne 1 - page 16, ligne 1; figures 1-3 * | 1,2,4 5,10 | |
| A | US-A-4 215 273  (STOKES) <br> * Colonne 4, lignes 60-62; figure 2 * | 8 | |
| A | US-A-3 949 225  (AGUILERA) <br> * Colonne 3, lignes 54-59; figure 1 * | 9 | **DOMAINES TECHNIQUES RECHERCHES (Int Cl 4)** <br><br> H 04 N   3/09 <br> G 02 B   26/10 |

Le present rapport de recherche a été etabli pour toutes les revendications

| Lieu de la recherche <br> LA HAYE | Date d achèvement de la recherche <br> 27-02-1986 | Examinateur <br> YVONNET J.W. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82